# FASCICULE DE BREVET EUROPEEN

(11) **EP 1 597 423 B1**
(45) Date de publication et mention de la délivrance du brevet: **04.10.2006**
(21) Numéro de dépôt: 04714815.0
(22) Date de dépôt: 26.02.2004
(51) Int. Cl.: D06M 11/68, D06M 11/69, C08K 9/02, C08K 9/08, B29C 70/48, B29C 70/44

(54) **RENFORT FIBREUX UTILE COMME AGENT IGNIFUGEANT, SON PROCEDE DE FABRICATION ET SON UTILISATION**
VERSTÄRKTES FASERMATERIAL ALS FLAMMHEMMENDES MITTEL, SEINE HERSTELLUNG UND SEINE VERWENDUNG
FIBROUS REINFORCEMENT USEFUL AS FIRE-RESISTANT AGENT, METHOD FOR PRODUCTION AND USE THEROF.

(30) Priorité: 26.02.2003 FR 0302327
(43) Date de publication de la demande: 23.11.2005
(73) Titulaire: Hexcel Reinforcements, 69100 Villeurbanne (FR)
(72) Inventeur: CHRISTOU, Philippe, F-38110 Saint Clair de la Tour (FR)
(74) Mandataire: Sarlin, Laure V.
(86) Numéro de dépôt international: PCT/FR2004/000433
(87) Numéro de publication internationale: WO 2004/076584

(56) Documents cités:
- EP-A- 0 093 903
- EP-A- 0 753 537
- WO-A-00/09362
- WO-A-98/50211
- CH-A- 509 367
- GB-A- 1 346 246
- GB-A- 2 250 291
- US-B1- 6 248 160

## Description

La présente invention concerne un renfort fibreux utile comme agent ignifugeant, son procédé de fabrication et son utilisation.

L'invention trouve notamment application dans le domaine des pièces composites utilisées dans l'industrie automobile, aéronautique ou navale.

De telles pièces composites peuvent être fabriquées par un procédé dit "direct" ou par un procédé dit "indirect". Un procédé direct est défini par le fait que un ou plusieurs renforts fibreux sont mis en oeuvre à l'état "sec" (c'est à dire sans la matrice finale), la résine ou matrice, de type thermoplastique, thermodurcissable ou un mélange des deux, étant mise en oeuvre séparément, par exemple par injection dans le moule contenant les renforts fibreux (procédé "RTM", de l'anglais Resin Transfer Molding), par infusion (dans un moule, au travers de l'épaisseur des renforts fibreux : procédé "LRI", de l'anglais Liquid Resin Infusion ou procédé "RFI", de l'anglais Resin Film Infusion), ou bien encore par enduction/imprégnation manuelle au rouleau ou au pinceau, sur chacune des couches unitaires de renfort fibreux, appliquées de manière successive sur la forme. Un procédé indirect est défini par le fait que les fibres et la résine sont au préalable associées avant d'être mises en oeuvre.

Pour les procédés RTM, LRI ou RFI, il faut en général tout d'abord fabriquer un préformé fibreux de la forme de l'article fini désiré puis imprégner ce préformé d'une résine thermoplastique ou thermodurcissable. La résine est injectée ou infusée par aspiration puis thermocompressage pour entraîner son durcissement après polymérisation.

Les pièces composites utilisées dans l'industrie automobile, aéronautique ou navale, sont en particulier soumises à des exigences très strictes en ce qui concerne leur caractère ininflammable.

Il existe différentes façons de rendre un matériau composite résistant à la flamme. Les solutions sont relativement bien connues de l'homme de l'art pour ce qui concerne les matériaux composites obtenus par un procédé indirect. Dans les applications de matériaux composites pour hautes performances, les matériaux fibreux imprégnés d'une résine, appelés couramment "préimprégnés" ou "prepregs", sont les matériaux intermédiaires les plus utilisés. Par exemple, le brevet US 5,714,419 décrit un "prepreg", comprenant une résine thermodurcissable modifiée contenant un retardateur de flamme, et un substrat en papier carbone imprégné avec ladite résine, ledit substrat contenant des fibres de carbone en polyacrylonitrile et un liant alcoolique. Le retardateur de flamme peut être un composé halogéné, un composé d'antimoine, ou un phosphate organique.

Dans le cas des "prepregs", la résine qui est imprégnée sur le renfort fibreux peut à loisir être modifiée par des agents ignifugeants de tous types et en particulier ceux qui ne seraient pas solubilisés ou bien ceux qui augmenteraient la viscosité de la résine de manière significative.

Dans les cas des résines destinées aux procédés directs (RTM, RFI, LRI...) il n'est pas possible d'utiliser des modificateurs solides dispersés dans ladite résine car ceux-ci seraient retenus (filtrés) par le renfort fibreux et il en résulterait un matériau composite de composition non homogène. Il n'est pas non plus possible d'utiliser des modificateurs qui auraient pour effet d'augmenter la viscosité de la résine injectée ou infusée, sous peine de modifier de façon trop importante et négative les paramètres du procédé de fabrication. Il faut donc tenir compte des ces impératifs pour formuler des résines pour les procédés directs, et ceci conduit le plus souvent à des résines modifiées qui présentent des défauts de performance, des défauts de mise en oeuvre ou bien encore des défauts de composition vis à vis de réglementations n'autorisant pas les ignifugeants halogénés par exemple. C'est pourquoi certains ont proposé de modifier le matériau composite par un traitement ultérieur.

Le brevet US 5,389,435 propose par exemple un matériau composite à base de fibres de carbone et de résine époxyde sur la surface duquel on stratifie un canevas en verre revêtu d'une composition comprenant une charge inorganique de type silicate et une résine époxyde pouvant être identique à celle du matériau composite. Une telle solution s'avère coûteuse car l'obtention de la caractéristique finale de résistance au feu n'est pas obtenue directement, elle est de plus non satisfaisante car la pièce est alourdie par la stratification sans gain de performances mécaniques.

Il faut aussi souligner que les matériaux décrits dans les deux brevets sus-mentionnés nécessitent, pour leur obtention, d'utiliser des solvants nocifs pour la santé et pour l'environnement de type méthyléthylcétone.

Le document GB 1346246 décrit un procédé pour rendre des textiles, par exemple en laine ou coton, ininflammables en les traitant avec du phosphore rouge et une résine.

Un problème que se propose de résoudre la présente invention est de fournir un renfort fibreux permettant d'obtenir, par un procédé direct, des matériaux composites ignifugés, de performances équivalentes à celle des matériaux composites obtenus à partir de "prepregs".

Un autre problème que se propose de résoudre la présente invention est de fournir un renfort fibreux de production aisée et ne nécessitant pas l'utilisation de solvants organiques nocifs pour la santé ou l'environnement.

Un autre problème que se propose de résoudre l'invention est de fournir un renfort fibreux qui permette d'obtenir par un procédé direct, des matériaux composites ignifugés exempts d'halogènes.

Un autre problème que se propose de résoudre l'invention est de fournir un renfort fibreux qui permette d'obtenir par procédé direct, des matériaux composites ignifugés présentant des propriétés mécaniques identiques à celles de matériaux non ignifugés.

Il a maintenant été découvert, et c'est le fondement de l'invention, qu'en traitant un support fibreux avec au moins une résine thermodurcissable et/ou une résine thermoplastique et au moins un composé inorganique du phosphore, on obtient un renfort fibreux permettant de fabriquer des matériaux composites ignifugés et qui conservent leurs propriétés mécaniques.

Ainsi, selon un premier aspect, l'invention concerne un renfort fibreux, notamment pour la réalisation de pièces composites, comprenant un support fibreux constitué de fibres de renfort de verre, carbone ou céramique éventuellement en mélange, traité à coeur ou, de préférence, recouvert au moins partiellement sur l'une de ses faces, par une composition contenant :
i) un ou plusieurs prépolymères thermodurcissables dont la température de ramollissement est inférieure ou égale à 150°C, de préférence comprise dans la gamme allant de 50 à 100°C, et/ou
   un ou plusieurs polymères thermoplastiques dont la température de transition vitreuse est inférieure à 300°C, de préférence comprise dans la gamme allant de 50 à 200°C, et
ii) un ou plusieurs composés inorganiques du phosphore, de préférence du phosphore rouge,
   le taux de traitement du support fibreux par le(s)dit(s) composé(s) inorganique(s) du phosphore étant compris dans la gamme allant de 2 à 20% en poids, de préférence dans la gamme allant de 4 à 12% en poids, et de préférence encore dans la gamme allant de 6 à 10% en poids et le prépolymère(s) thermodurcissable(s) et/ou le polymère(s) thermoplastique(s) représentant de 1 à 6 % du poids total du renfort fibreux.

Les renforts fibreux selon l'invention comprennent une faible quantité de prépolymère thermodurcissable et/ou de polymère thermoplastique : celle-ci représente de 1 à 6 % du poids total du renfort fibreux (support fibreux + composition). En effet, ces derniers ne sont présents que pour fixer, au support fibreux, les composés inorganiques du phosphore jouant le rôle d'agent ignifugeant. Pour la réalisation ultérieure de pièce composite à partir des renforts fibreux selon l'invention, un complément de résine sera nécessaire, ce qui n'est pas le cas des préimprégnés dans lesquels la quantité de résine imprégnant le support est suffisante pour réaliser des pièces composites par voie indirecte.

Le renfort fibreux selon l'invention comporte un support fibreux. Le support fibreux est constitué de fibres de renfort, telles que des fibres de verre, carbone, céramique, éventuellement en mélange. Un tel support peut se présenter sous la forme d'un tissu ou encore d'un non tissé, les fibres pouvant être orientées de façon mono, bi ou pluridirectionnelle. De manière avantageuse, le support fibreux possède une masse surfacique comprise dans la gamme allant de 80 à 4 000 g/m², de préférence dans la gamme allant de 100 à 2 500 g/m², et de préférence encore dans la gamme allant de 150 à 400 g/m².

Le support fibreux est traité par une composition comprenant un ou plusieurs prépolymères thermodurcissables et/ou un ou plusieurs polymères thermoplastiques, et un ou plusieurs composés inorganiques du phosphore. La composition peut être appliquée de manière à obtenir un traitement à coeur ou bien, préférentiellement, à recouvrir au moins partiellement au moins l'une des faces du support fibreux, par exemple une seule des grandes faces du support ou encore les deux faces. Ladite composition contient avantageusement :
- de 20 à 60 % en poids de prépolymère(s) thermodurcissable(s) et/ou de polymère(s) thermoplastique(s) ; et
- de 80 à 40 % en poids de composé(s) inorganique(s) du phosphore.

On peut donc en déduire que, pour un taux de traitement du support fibreux par le(s) composé(s) inorganique(s) du phosphore compris dans la gamme allant de 2 à 20% en poids, on a une quantité de prépolymère(s) thermodurcissable(s) et/ou de polymère(s) thermoplastique(s) représentant environ 2,9 % à 4,8 % du poids total du renfort fibreux (support fibreux + composition).

Le ou les prépolymères thermodurcissables sont choisis pour être compatibles avec la matrice de résine mise ultérieurement en oeuvre lors de la fabrication des pièces composites. Différents prépolymères thermodurcissables peuvent être mis en oeuvre, par exemple ceux classiquement utilisés dans les opérations de moulage. On pourra utiliser, de manière avantageuse mais non limitative, les résines bismaléimides (BMI), les résines cyanates, les résines époxydes et les mélanges de ces résines, ou un système hybride de résines combinant, par exemple, des comonomères d'estercyanate et de bismaléimide, des comonomères d'estercyanate et d'époxyde et des comonomères d'époxyde et de bismaléimide, éventuellement associés à un durcisseur et/ou un catalyseur ou à un mélange de durcisseurs et/ou de catalyseurs adaptés. Parmi ces résines, les résines époxydes sont particulièrement préférées.

Les agents durcisseurs ou catalyseurs peuvent être présents sous forme discrète pulvérulente ou bien en combinaison intime avec le(s) prépolymère(s) thermodurcissable(s).

Les résines bismaléimides sont des résines thermopolymérisables dont les groupes fonctionnels réactifs sont de type maléimido. Selon l'invention, on entend par bismaléimides, les maléimides mono-, bis-, tris-, tetrakis-, ou de fonctionnalité supérieure, seules ou en mélange, les bismaléimides étant préférées. Les résines bismaléimides sont le plus généralement obtenues par réaction de l'anhydride maléique ou d'un anhydride maléique substitué tel que l'anhydride méthylmaléique, avec une di- ou polyamine aromatique ou aliphatique. A cet effet, on pourra se référer aux brevets US 3,018,290, US 3,018,292, US 3,627,780, US 3,770,691, et US 3,839,358.

On peut également mettre en oeuvre les résines nadicimides correspondantes, préparées de manière analogue, en faisant réagir une di- ou polyamine, non pas avec de l'anhydride maléique mais avec le produit issu d'une réaction de Diels-Alder effectuée entre l'anhydride maléique ou un anhydride maléique substitué et un diène tel que le cyclopentadiène. Aussi, au sens de l'invention, le terme bismaléimide peut inclure les prépolymères de type nadicimides.

Les di- ou polyamides mis en oeuvre, sont de préférence des diamines aliphatiques ou aromatiques. Les diamines aliphatiques peuvent être linéaires, ramifiées, cycliques, ou encore contenir des hétéroatomes. Les diamines aliphatiques particulièrement préférées sont l'hexanediamine, l'octanediamine, la décanediamine, la dodécanediamine, et la triméthylhexanediamine.

Les diamines aromatiques, peuvent contenir un ou plusieurs noyaux aromatiques et peuvent également contenir des liaisons fusionnées. Les diamines aromatiques préférées sont les phénylènediamines, les toluènediamines, les différentes méthylènedianilines, et particulièrement la 4,4'-methylènedianiline ; les napthalènediamines ; les différents oligomères polyarylènes présentant un groupe amino-terminal et correspondant à la formule :

H₂N-Ar[X-Ar]ₙNH₂, dans laquelle chaque Ar représente indépendamment un radical arylène mono- ou poly-noyau, chaque X représente indépendamment -O-, -S-, -CO₂-, -SO₂-, -O-CO-, (C₁-C₁₀)alkyle, (C₁-C₁₀)alkyle halogéné, (C₂-C₁₀)alcoxy, aryloxy, polyoxyalkylène ou polyoxyarylène, et n représente un entier de 1 à 10 ; et les di- et polysiloxanes comportant un aminoalkyle primaire terminal.

De façon avantageuse, on pourra utiliser un mélange eutectique de résines bismaléimides qui présente généralement un point de fusion bien inférieur aux bismaléimides individuelles contenues dans ledit mélange. De tels mélanges eutectiques sont disponibles dans le commerce, mais on pourra également se référer aux brevets US 4,413,107 et US 4,377,657.

Les résines cyanates sont des résines thermopolymérisables dont la réactivité provient de la présence de groupes cyanates, ou -OCN. Ces résines sont générallement obtenues par réaction d'un composé phénolique di- ou poly-fonctionnel avec un halogénure de cyanogène tel que ClCN ou BrCN. Ces types de réaction sont bien connus de l'homme de l'art. Les produits issus de cette réaction sont des di- ou polycyanates esters de phénols.

Les prépolymères d'esters de cyanates peuvent être préparés par traitement thermique des monomères à fonctionnalité cyanate avec ou sans catalyseur. Le degré de polymérisation peut être suivi grâce à la mesure de la viscosité. Les catalyseurs peuvent être utilisés pour favoriser la polymérisation. De tels prépolymères et catalyseurs sont bien connus de l'homme de l'art.

De nombreuses résines cyanates sont disponibles dans le commerce ou peuvent être préparées à partir de mono-, di-, ou polyphénols, incluant les composés aromatiques fusionnés. Les phénols peuvent être substitués par une grande variété de substituants organiques, tels que par exemple un atome d'halogène, un groupe nitro, phénoxy, acyloxy, acyle, cyano, alkyle, aryle, alkaryle, cycloalkyle. Les groupes alkyles peuvent être halogénés, les substituants de type méthyle ou trifluorométhyle étant particulièrement préférés. Les groupes phénols préférés sont les diphénols mononucléaires tels que l'hydroquinone et le résorcinol, les différents bisphénols, tel que le bisphénol A, bisphénol F, ou bisphénol S et les différents dihydroxynaphtalènes et les oligomères du phénol et du crésol dérivés du novolaque.

On pourra également utiliser des phénols tels que les oligomères phénoliques substitués par un dicyclopentadiène obtenus par addition de Friedel et Crafts de dicyclopentadiènes sur un phénol éventuellement substitué, comme décrit notamment dans le brevet US 3,536,734.

On pourra également utiliser des résines époxydes seules ou en tant que comonomères dans les systèmes de résines cyanates ou bismaléimides ci-dessus mentionnés. Les résines époxydes sont des résines thermodurcissables contenant un groupe oxirane, ou époxy en tant que groupe fonctionnel. Le groupe oxirane peut être obtenu selon différents procédés, par exemple par réaction d'un composé insaturé avec un peroxygène tel que l'acide peracétique ou par réaction d'une épichlorhydrine avec un composé présentant un hydrogène réactif, suivi par une déshydrohalogénation. Là encore, ces méthodes de synthèse sont bien connues de l'homme de l'art et on pourra par exemple se référer au « Handbook of Epoxy Resins, Lee and Neville, Eds., McGrawHill, 1967, in chapters 1 and 2 ». Bien entendu, on utilisera pratiquement les résines disponibles dans le commerce et en particulier les résines époxy dérivées de l'épichlorhydrine.

Des exemples de telles résines sont les di- et polyglycidyles dérivés des bisphénols, tels que le bisphénol A, bisphénol F et bisphénol S ; les dihydroxynaphtalènes, par exemple 1,4-, 1,6-, 1,7-, 2,5-, 2,6- et 2,7-dihydroxynaphtalènes ; 9,9-bis[hydroxyphényl]fluorène ; les phénols et crésols substitués par du dicyclopentadiène comme décrit dans le brevet US 3,536,734 ; les aminophénols, en particulier le 4-aminophénol ; les amines telles que la 4,4'-, 1,4'- et 3,3'-méthylènedianiline et les dérivés correspondants dans lesquels le groupe méthylène est remplacé par un (C₁-C₄)alkyle éventuellement substitué, -O-, -S-,-CO, -O-CO-, -O-CO-O-, -SO₂-, ou un groupe aryle ; et les oligomères polyarylène présentant des fonctions amino et/ou hydroxy terminales, et présentant des ponts -O-, -S-, -CO-, -O-CO-, -O-CO-O-, -SO₂- et/ou des groupes alkyle inférieurs intercalés entre les groupes aryle mono- ou polynucléaires comme décrits dans le brevet US 4,175,175.

Les novolaques de type crésol ou phénol sont également des résines époxy appropriées au sens de l'invention. Les novolaques sont préparés par condensation du phénol ou du crésol avec le formaldéhyde, et présentent le plus fréquemment plus de deux groupes hydroxy par molécule. Les dérivés glycidyles du novolaque se présentant sous la forme solide pourront être également utilisés.

A titre d'exemple de polymères thermoplastiques pouvant être utilisés dans le cadre de l'invention, on pourra citer les polyimides, polyétherimides (PEI), polyéthersulfones (PES), polysulfones, polyéthercétones, polyétheréthercetones (PEEK), polyamides, polyamideimides, et leurs analogues.

Le ou les composés inorganiques du phosphore utilisés dans la composition sus-mentionnée sont choisis pour être non solubles dans la matrice de résine mise en oeuvre ultérieurement lors de la fabrication du matériau composite. Il est important que ce(s) composé(s) ne soi(en)t pas halogéné(s). A titre d'exemple, on peut citer les polyphosphates d'ammonium ou le phosphore rouge, ce dernier composé étant particulièrement préféré.

Le taux de traitement du support fibreux par le(s) composé(s) inorganique(s) du phosphore est compris dans la gamme allant de 2 à 20 % en poids, de préférence dans la gamme allant de 4 à 12 % en poids, et de préférence encore dans la gamme allant de 6 à 10 % en poids. Avantageusement le taux de composé(s) inorganique(s) du phosphore dans le support fibreux est tel que le taux de ce(s) composé(s) dans la matrice du composite final soit compris entre 2 et 10% en poids.

Par "taux de traitement du support fibreux" on entend le rapport du poids du (des) composé(s) inorganique(s) du phosphore sur la somme des poids du support fibreux et dudit (desdits) composé(s).

Par "taux de composé(s) inorganique(s) du phosphore dans la matrice finale" on entend le rapport du poids du (des) composé(s) inorganique(s) du phosphore sur la somme des poids de la matrice ou résine organique et dudit (desdits) composé(s).

Le ou les composés inorganiques du phosphore sont présents au moins sur une partie de la surface du support fibreux, sous forme de particules ou de zones discrètes.

La composition appliquée sur le support fibreux peut également comprendre un liant dont le rôle est d'aider à fixer les particules de composé(s) inorganique(s) du phosphore sur ou dans le support fibreux. Le liant est choisi de préférence parmi les résines bismaléimides, les résines cyanates, les résines époxydes et leurs mélanges, lesdites résines étant telles que définies précédemment pour le(s) prépolymère(s) thermodurcissable(s).

Avantageusement, le taux de traitement du support fibreux par le liant est compris dans la gamme allant de 0 à 10 % en poids, de préférence dans la gamme allant de 1 à 3% en poids.

Lorsqu'il est présent au moins sur une partie de la surface du support fibreux, le liant est sous la forme d'un film ou bien sous la forme de particules ou de zones discrètes.

La composition peut également contenir jusqu'à 10 % en poids d'un ou plusieurs additifs. Sans que la liste soit exhaustive, ces additifs peuvent être sélectionnés parmi les particules thermiquement conductives, les particules électriquement conductives, les colorants, les catalyseurs, les agents de cuisson, les agents de couplage.

Selon un second aspect, l'invention concerne un procédé de fabrication d'un renfort fibreux comportant un support fibreux, constitué de fibres de renfort de verre, carbone ou céramique éventuellement en mélange, comprenant les étapes suivantes :
a) préparer un mélange contenant
   - 20 à 60 % en poids d'un ou plusieurs prépolymères thermodurcissables dont la température de ramollissement est inférieure ou égale à 150° C, de préférence comprise dans la gamme allant de 50 à 100° C, et/ou d'un ou plusieurs polymères thermoplastiques dont la température de transition vitreuse est inférieure à 300°C, de préférence comprise dans la gamme allant de 50°C à 200°C, et
   - 80 à 40% en poids d'un ou plusieurs composés inorganiques du phosphore, et
b) traiter à coeur ou recouvrir au moins partiellement le support fibreux avec le mélange ainsi obtenu, de façon à ce que le prépolymère(s) thermodurcissable(s) et/ou le polymère(s) themoplastique(s) représente de 1 à 6 % du poids total du renfort fibreux.

Ou encore, l'étape b) consistera à traiter à coeur ou recouvrir au moins partiellement le support fibreux avec le mélange ainsi obtenu, de façon à ce que le taux de traitement du support fibreux par le(s)dit(s) composé(s) inorganique(s) du phosphore soit compris dans la gamme allant de 2 à 20% en poids, de préférence dans la gamme allant de 4 à 12 % en poids, et de préférence encore dans la gamme allant de 6 à 10%.

Selon un mode de réalisation du procédé de l'invention, le(s) prépolymère(s) thermodurcissable(s), le(s) polymère(s) thermoplastique(s) ou leur mélange ("polymère"), et le ou les composés inorganiques du phosphore ("composé"), se présentent sous forme pulvérulente.

Dans ce cas, il est préférable d'utiliser ces constituants dans un rapport pondéral polymère/composé compris dans la gamme allant de 60:40 à 20:80, préférentiellement dans la gamme allant de 60 :40 à 40:60. Il est également préférable de mélanger les constituants sous atmosphère inerte.

Le dépôt du mélange pulvérulent peut être effectué selon toute technique classique, par exemple, en plongeant le support fibreux dans un bac de poudre puis en le soumettant à des vibrations en sortie, ou bien par pulvérisation au pistolet ou encore selon d'autres techniques classiques utilisant des cylindres applicateurs. Le(s) constituant(s) organique(s) de la poudre est (sont) ensuite fondu(s) partiellement ou totalement par toute technique appropriée telle que le chauffage par rayonnement Infra-Rouge, pour être maintenue sur le support fibreux.

Selon un autre mode de réalisation du procédé de l'invention, on mélange dans un premier temps le(s) prépolymère(s) thermodurcissable(s), le(s) polymère(s) thermoplastique(s) ou leur mélange, en émulsion ou dispersion aqueuse, avec le(s) composé(s) inorganique(s) du phosphore en dispersion aqueuse, dans un rapport pondéral de matière active (appelée encore matière sèche) polymère/composé compris dans la gamme allant de 60 :40 à 20 :80, préférentiellement dans la gamme allant de 35:65 à 20:80.

On immerge ensuite le support fibreux dans le mélange obtenu puis, après exprimage pour contrôler et réguler l'emport de liquide dans le support fibreux, on le sèche par toute technique appropriée, telle que le soufflage d'air chaud. On peut également envisager de déposer le mélange liquide par d'autres méthodes telles que la projection, le léchage sur rouleau ou bien encore, sans être exhaustif, par une technique dite d'enduction, à la racle ou au cylindre rotatif.

De manière particulièrement avantageuse, on pourra traiter ensuite le support fibreux séché par une technique de poudrage classique au moyen d'un liant tel que défini précédemment, sous forme de poudre (qui sera fondue pour adhérer au support fibreux), appliqué sur au moins une des faces du support fibreux traité et séché. Il est notamment possible de se référer aux techniques de poudrage décrites dans les demandes de brevet WO 90/04507 et WO 98/50211. Le liant ainsi déposé aura comme rôle celui de permettre la réalisation de préformes à partir d'empilements de plusieurs supports fibreux.

Le renfort fibreux selon l'invention peut être assemblé et mis en forme à l'état sec, préalablement à son introduction dans un moule, avec réalisation de préformes semi-rigides, aisément manipulables, pouvant se découper rapidement, par exemple sous forme d'empilement et s'adaptant bien à des procédés automatiques.

Ainsi, selon un troisième aspect, l'invention concerne un empilement de renforts fibreux tels que définis ci-dessus.

Les empilements de différents renforts fibreux selon l'invention sont réalisés par assemblage selon les techniques bien connues, à des températures généralement inférieures à 100°C et sous pression réduite, notamment de 50 à 100 kPa. Bien entendu, le renfort fibreux et les empilements selon l'invention peuvent être préformés à une température inférieure à 100° C et sous pression réduite notamment comprise entre 50 et 100 KPa, suivant la forme désirée correspondant à la pièce composite à fabriquer. Ces conditions sont, bien entendu, fonction des différents constituants de la composition appliquée sur le support fibreux. En particulier, des températures plus élevées pourront être utilisées dans le cas où le(s) prépolymère(s) thermodurcissable(s) est (sont) combiné(s) à un durcisseur et que l'on souhaite obtenir la réticulation ou bien dans le cas où la composition contient au moins un polymère thermoplastique que l'on désire fondre.

Par ailleurs, ces différents produits sont parfaitement adaptés pour la réalisation de pièces composites, en particulier de pièces composites moulées. De telles pièces composites, qui constituent un quatrième aspect de l'invention, sont obtenues en associant un renfort fibreux ou un empilement selon l'invention, à une matrice de résine compatible avec la composition de prépolymère(s) thermodurcissable(s) et/ou de polymère(s) thermoplastique(s), et de composé(s) inorganique(s) du phosphore. De manière avantageuse, cette matrice de résine sera de nature identique à celle de la résine utilisée dans la composition.

Pour obtenir ces pièces composites, on peut mettre en oeuvre un procédé direct, comme le procédé RTM, RFI ou LRI.

Une particularité de l'invention est que, malgré l'objectif initial de proposer un renfort fibreux pour utilisation dans des procédés directs, il est également possible d'obtenir des pièces composites par un procédé indirect dans lequel le renfort fibreux ou l'empilement de renforts fibreux selon l'invention, est imprégné par les techniques bien connue de l'homme de l'art en vue de la fabrication de préimprégné ou "prepreg".

Les pièces composites selon l'invention ont avantageusement un taux de fibres en volume compris dans la gamme allant de 50 à 60%.

Par ailleurs, la solution proposée par l'invention, autorise, lors de la conception des pièces composites, un écoulement de la résine dans le renfort fibreux. De plus, les propriétés mécaniques des pièces composites fabriquées sont particulièrement satisfaisantes ; en outre, les pièces composites fabriquées présentent d'excellentes propriétés de résistance au feu.

L'invention concerne donc, selon un cinquième aspect, l'utilisation d'un renfort fibreux ou d'un empilement de renforts fibreux selon l'invention, comme agent ignifugeant pour la fabrication de pièces composites.

Les exemples ci-après illustrent l'invention sans toutefois la limiter.

### Exemple n°1 : Préparation d'un renfort fibreux à base de résine époxyde et de phosphore rouge

Une dispersion aqueuse de phosphore rouge à 50% d'extrait sec et 45% de taux de phosphore (réf. Exolit® RP 622, commercialisée par la Société Clariant) est mélangé à température ambiante avec une émulsion aqueuse de résine époxyde (réf. Prox E032-38E, commercialisée par la Société Synthron) à 55% d'extrait sec. Un agent épaississant (réf. Texipol® 5028, commercialisé par la Société Scott-Bader) est également ajouté pour limiter la vitesse du phénomène de sédimentation. De l'eau désionisée est également utilisée pour régler la teneur en matière active de l'ensemble de la composition :

| | |
|---|---|
| Exolit® RP622 | 20,10 |
| Prox E032-38 | 4,27 |
| Texipol® 5028 | 1,20 |
| Eau | 74,43 |

On immerge ensuite un tissu carbone constitué d'une armure satin de 5 de 370 g/m² (réf. G0926, commercialisé par la Société Hexcel Fabrics) dans le mélange obtenu ci-dessus de telle sorte à obtenir un taux de traitement du tissu de l'ordre de 6 à 7% en poids.

Le tissu imprégné et séché est ensuite poudré sur ses deux faces avec une résine époxyde (réf. HP03, commercialisée par la Société Hexcel Fabrics) de granulométrie moyenne voisine de 35 µm, selon la technique standard de poudrage, avec des paramètres de température de fusion et de vitesse également standards, de manière à obtenir un taux de traitement de poudre de 5 ± 0,5%.

### Exemple n°2 : Préparation d'un renfort fibreux à base de résine époxyde et de phosphore rouge

Une poudre de résine époxyde (réf. HP03, commercialisée par la Société Hexcel Fabrics) de granulométrie moyenne voisine de 35 µm est mélangée à température ambiante et sous atmosphère inerte au moyen d'un mélangeur à poudres Forberg F60, dans la proportion 1/1, avec une poudre de phosphore rouge (réf. Exolit® RP605, commercialisée par la Société Clariant). Un tissu carbone constitué d'une armure satin de 5 de 370 g/m² (réf. G0926, commercialisé par la Société Hexcel Fabrics) est poudré sur ses deux faces par le mélange de poudres obtenu ci-dessus, selon la technique standard de production, avec des paramètres de températures et de vitesse également standards, de façon à obtenir un taux de traitement du tissu de l'ordre de 10 à 12 % en poids.

### Exemple n°3 (comparatif) : Préparation d'un renfort fibreux non ignifugé, à base de résine époxyde

Un tissu carbone constitué d'une armure satin de 5 de 370 g/m² (réf. G0926, commercialisé par la Société Hexcel Fabrics) est poudré sur ses deux faces avec une résine époxyde (réf. HP03, commercialisée par la Société Hexcel Fabrics) de granulométrie moyenne voisine de 35 µm, selon la technique standard de poudrage, avec des paramètres de température de fusion et de vitesse également standards, de manière à obtenir un taux de traitement de poudre de 5 ± 0,5%.

### Exemple n°4 : Préparation de composites et évaluation de leurs propriétés

Des plaques composites sont réalisées par injection de résine époxyde structurale (réf. RTM6, commercialisée par la Société Hexcel Composites) dans un empilement de renforts fibreux selon les exemples 1 à 3, préalablement préformés à 100°C sous pression réduite (2 mbar de vide résiduel).

Les pièces composites obtenues ont une épaisseur de 2,2 mm et un taux de fibres en volume de 57 %, ce qui correspond, pour les exemples 1 et 2, à un taux de phosphore rouge de l'ordre de 8 ± 2 % en poids dans la matrice organique finale.

Ces pièces ont été soumises à un test de résistance au feu selon les méthodes de mesure FAR 25-853-a (test de 60s) et FAR 25-853-b (test de 12 s) en vigueur pour les applications aéronautiques et bien connues de l'homme du métier.

Ces pièces ont également été soumises à un test de mesure de résistance au cisaillement interlaminaire ou "ILSS" (de l'anglais Interlaminar Shear Strength) bien connu de l'homme du métier, et décrit dans les normes NF EN ISO 14130, ASTM D2344 ou NF EN 2563. Cette propriété est mesurée à 120°C, après immersion des échantillons à tester pendant 72h dans l'eau bouillante.

Les résultats sont présentés dans le Tableau suivant :

| Exemple | Résistance au feu | | | | ILSS (MPa) ③ |
|---|---|---|---|---|---|
| | Durée d'inflammation (s) | | Longueur détruite (mm) | | |
| | ① | ② | ① | ② | |
| 1 | 0 | 0 | 47 | 10 | 34 |
| 2 | 0 | 0,5 | 57,5 | 15 | 35 |
| 3 (Comparatif) | 22 | 54 | 105 | 55 | 34 |

| | | | | | |
|---|---|---|---|---|---|
| ① FAR 25-853-a ② FAR 25-853-b ③ testé à 120°C après 72h d'immersion dans l'eau bouillante | | | | | |

Ces résultats montrent que les renforts fibreux de l'invention permettent de préparer des pièces composites possédant d'excellentes propriétés de résistance de feu, sans détérioration de leurs propriétés mécaniques.

## Revendications

1. Renfort fibreux, notamment pour la réalisation de pièces composites, comprenant un support fibreux constitué de fibres de renfort de verre, carbone ou céramique éventuellement en mélange, traité à coeur ou recouvert au moins partiellement sur l'une de ses faces, par une composition contenant :
i) un ou plusieurs prépolymères thermodurcissables dont la température de ramollissement est inférieure ou égale à 150°C, de préférence comprise dans la gamme allant de 50 à 100°C, et/ou
un ou plusieurs polymères thermoplastiques dont la température de transition vitreuse est inférieure à 300°C, de préférence comprise dans la gamme allant de 50 à 200°C, et
ii) un ou plusieurs composés inorganiques du phosphore, de préférence du phosphore rouge,
le taux de traitement du support fibreux par le(s)dit(s) composé(s) inorganique(s) du phosphore étant compris dans la gamme allant de 2 à 20% en poids, de préférence dans la gamme allant de 4 à 12 % en poids, et de préférence encore dans la gamme allant de 6 à 10% en poids et le prépolymère(s) thermodurcissable(s) et/ou le polymère(s) thermoplastique(s) représentant de 1 à 6 % du poids total du renfort fibreux.

2. Renfort fibreux, notamment pour la réalisation de pièces composites, comprenant un support fibreux constitué de fibres de renfort de verre, carbone ou céramique éventuellement en mélange, traité à coeur ou recouvert au moins partiellement sur l'une de ses faces, par une composition contenant :
i) un ou plusieurs prépolymères thermodurcissables dont la température de ramollissement est inférieure ou égale à 150°C, de préférence comprise dans la gamme allant de 50 à 100°C, et/ou
un ou plusieurs polymères thermoplastiques dont la température de transition vitreuse est inférieure à 300°C, de préférence comprise dans la gamme allant de 50 à 200°C,
le(s)dit(s) prépolymère(s) thermodurcissable(s) et/ou polymère(s) thermoplastique(s)représentant de 20 à 60 % en poids de la composition et
ii) un ou plusieurs composés inorganiques du phosphore, de préférence du phosphore rouge, représentant de 80 à 40% en poids de la composition,
le taux de traitement du support fibreux par le(s)dit(s) composé(s) inorganique(s) du phosphore étant compris dans la gamme allant de 2 à 20% en poids, de préférence dans la gamme allant de 4 à 12 % en poids, et de préférence encore dans la gamme allant de 6 à 10%.

3. Renfort fibreux selon la revendication 1 ou 2, **caractérisé en ce que** le support fibreux comprend en outre au moins sur une partie de sa surface un liant présent sous forme de film ou bien sous forme de particules ou de zones discrètes.

4. Renfort fibreux selon l'une des revendications 1 à 3, **caractérisé en ce que** le ou les prépolymères thermodurcissables est (sont) choisi(s) parmi les résines bismaléimides, les résines cyanates, les résines époxydes, et les mélanges de ces résines.

5. Renfort fibreux selon l'une des revendications 1 à 4, **caractérisé en ce que** le ou les polymères thermoplastiques est (sont) choisi(s) parmi les polyimides, les polyétherimides, les polyéthersulfones, les polysulfones, les polyéthercétones, les polyétheréthercetones, les polyamides, et les polyamideimides.

6. Procédé de fabrication d'un renfort fibreux comprenant un support fibreux constitué de fibres de renfort de verre, carbone ou céramique éventuellement en mélange, comprenant les étapes suivantes :
a) préparer un mélange contenant
• 20 à 60 % en poids d'un ou plusieurs prépolymères thermodurcissables dont la température de ramollissement est inférieure ou égale à 150°C, de préférence comprise dans la gamme allant de 50 à 100°C, et/ou d'un ou plusieurs polymères thermoplastiques dont la température de transition vitreuse est inférieure à 300°C, de préférence comprise dans la gamme allant de 50 à 200°C, et
• 80 à 40% en poids d'un ou plusieurs composés inorganiques du phosphore, de préférence de phosphore rouge, et
b) traiter à coeur ou recouvrir au moins partiellement le support fibreux avec le mélange ainsi obtenu, de façon à ce que le prépolymère(s) thermodurcissable(s) et/ou le polymère(s) thermoplastique(s) représente de 1 à 6 % du poids total du renfort fibreux.

7. Procédé de fabrication d'un renfort fibreux constitué de fibres de renfort de verre, carbone ou céramique éventuellement en mélange, comprenant un support fibreux, comprenant les étapes suivantes :
a) préparer un mélange contenant
• 20 à 60 % en poids d'un ou plusieurs prépolymères thermodurcissables dont la température de ramollissement est inférieure ou égale à 150°C, de préférence comprise dans la gamme allant de 50 à 100°C, et/ou d'un ou plusieurs polymères thermoplastiques dont la température de transition vitreuse est inférieure à 300°C, de préférence comprise dans la gamme allant de 50 à 200°C, et
• 80 à 40% en poids d'un ou plusieurs composés inorganiques du phosphore, de préférence de phosphore rouge, et
b) traiter à coeur ou recouvrir au moins partiellement le support fibreux avec le mélange ainsi obtenu, de façon à ce que le taux de traitement du support fibreux par le(s)dit(s) composé(s) inorganique(s) du phosphore soit compris dans la gamme allant de 2 à 20% en poids, de préférence dans la gamme allant de 4 à 12 % en poids, et de préférence encore dans la gamme allant de 6 à 10%.

8. Procédé selon la revendication 6 ou 7, **caractérisé en ce que** à l'étape a) on utilise le mélange sous une forme pulvérulente, présentant un taux de composé(s) inorganique(s) du phosphore compris dans la gamme allant de 40 à 80% en poids, et **en ce qu'**à l'étape b) le support fibreux est poudré avec le mélange, qui est ensuite fixé par fusion partielle ou totale de son (ses) constituant(s) organique(s).

9. Procédé selon la revendication 8, **caractérisé en ce que** l'étape a) est réalisée sous atmosphère inerte.

10. Procédé selon la revendication 6 ou 7, **caractérisé en ce qu'**à l'étape a) on utilise un mélange de prépolymère(s) thermodurcissable(s) et/ou de polymère(s) thermoplastique(s), en émulsion ou en dispersion aqueuse, et de composé(s) inorganique(s) du phosphore en dispersion aqueuse, dans un rapport pondéral de matière active compris dans la gamme allant de 60:40 à 20:80, de préférence dans la gamme allant de 35:65 à 20:80, et **en ce qu'**à l'étape b) le support fibreux est immergé dans le mélange ou bien enduit au moins partiellement sur au moins une de ses faces par ledit mélange.

11. Procédé selon la revendication 10, **caractérisé en ce que** le support fibreux obtenu à l'étape b) est séché puis poudré à l'aide d'un liant.

12. Procédé selon l'une des revendications 6 à 11 **caractérisé en ce que** le ou les prépolymères thermodurcissables est (sont) choisi(s) parmi les résines bismaléimides, les résines cyanates, les résines époxydes, et les mélanges de ces résines.

13. Procédé selon l'une des revendications 6 à 12, **caractérisé en ce que** le ou les polymères thermoplastiques est (sont) choisi(s) parmi les polyimides, les polyétherimides, les polyéthersulfones, les polysulfones, les polyéthercétones, les polyétheréthercetones, les polyamides, et les polyamideimides.

14. Empilement de renforts fibreux selon l'une des revendications 1 à 5.

15. Pièce composite, **caractérisée en ce qu'**elle est obtenue en associant au moins un renfort fibreux selon l'une des revendications 1 à 5 ou un empilement selon la revendication 14, à une matrice de résine compatible avec la composition de prépolymère(s) thermodurcissable(s) et/ou de polymère(s) thermoplastique(s), et de composé(s) inorganique(s) du phosphore.

16. Utilisation d'un renfort fibreux selon l'une des revendications 1 à 5, ou d'un empilement selon la revendication 14, comme agent ignifugeant pour la fabrication de pièces composites.

17. Utilisation selon la revendication 16 **caractérisée en ce que** la pièce composite est fabriqué selon un procédé direct, du type RTM (Resin Transfer Molding) ou LRI (Liquid Resin Infusion).

## Claims

1. Fibrous reinforcement, in particular to produce composite items, comprising a fibrous support consisting of glass, carbon or ceramic reinforcement fibres, optionally a mixture thereof, treated throughout or coated at least in part on one of its surfaces with a composition containing:
i) one or more thermosetting prepolymers whose softening point is 150°C or lower, preferably ranging from 50 to 100°C, and/or one or more thermoplastic polymers whose glass transition temperature is lower than 300°C, preferably ranging from 50 to 200°C, and
ii) one or more inorganic phosphorus compounds, preferably red phosphorus
the treatment ratio of the fibrous support with said inorganic phosphorus compound(s) ranging from 2 to 20 % by weight, preferably from 4 to 12 % by weight, further preferably ranging from 6 to 10 % by weight, and the thermosetting prepolymer(s) and/or thermoplastic polymer(s) representing 1 to 6 % of the total weight of the fibrous reinforcement.

2. Fibrous reinforcement, in particular to produce composite items, comprising a fibrous support consisting of glass, carbon or ceramic reinforcement fibres, optionally a mixture thereof, treated throughout or coated at least in part on one of its surfaces with a composition containing:
i) one or more thermosetting prepolymers whose softening point is 150°C or lower, preferably ranging from 50 to 100°C, and/or
one or more thermoplastic polymers whose glass transition temperature is lower than 300°C, preferably ranging from 50 to 200°C,
said thermosetting prepolymer(s) and/or thermoplastic polymer(s) representing 20 to 60 % by weight of the composition, and
ii) one or more inorganic phosphorus compounds, preferably red phosphorus, representing 80 to 40 % by weight of the composition
the treatment ratio of the fibrous support with said inorganic phosphorus compound(s) ranging from 2 to 20 % by weight, preferably ranging from 4 to 12 % by weight, further preferably from 6 to 10 %.

3. Fibrous reinforcement as in claim 1 or 2, **characterized in that** the fibrous support also comprises a binder at least on part of its surface, in film form or in the form of particles or discrete areas.

4. Fibrous reinforcement as in any of claims 1 to 3, **characterized in that** the thermosetting prepolymer(s) are chosen from among bismaleimide resins, cyanate resins, epoxy resins, and mixtures of these resins.

5. Fibrous reinforcement as in any of claims 1 to 4, **characterized in that** the thermoplastic polymer(s) are chosen from among polyimides, polyetherimides, polyethersulfones, polysulfones, polyether ketones, polyether ether ketones, polyamides, polyamide-imides.

6. Method for fabricating a fibrous reinforcement containing a fibrous support consisting of glass, carbon or ceramic reinforcement fibres, optionally a mixture thereof, comprising the following steps:
a) preparing a mixture containing:
• 20 to 60 % by weight of one or more thermosetting prepolymers whose softening point is 150°C or lower, preferably ranging from 50 to 100°C, and/or one or more thermoplastic polymers whose glass transition temperature is lower than 300°C, preferably ranging from 50 to 200°C, and
• 80 to 40 % by weight of one or more inorganic phosphorus compounds, preferably red phosphorus, and
b) treating throughout or coating the fibrous support at least in part with the mixture obtained so that the thermosetting prepolymer(s) and/or thermoplastic polymer(s) represent 1 to 6 % by weight of the total weight of the fibrous reinforcement.

7. Method for fabricating a fibrous reinforcement consisting of glass, carbon or ceramic reinforcement fibres, optionally a mixture thereof, containing a fibrous support, method comprising the following steps:
a) preparing a mixture containing
• 20 to 60 % by weight of one or more thermosetting prepolymers whose softening point is 150°C or lower, preferably ranging from 50 to 100°C, and/or one or more thermoplastic polymers whose glass transition temperature is lower then 300°C, preferably ranging from 50 to 200°C, and
• 80 to 40 % by weight of one or more inorganic phosphorus compounds, preferably red phosphorus, and
b) core treating or coating the fibrous support at least in part with the mixture obtained so that the treatment ratio of the fibrous support with said inorganic phosphorus compound(s) lies in the range of 2 to 20 % by weight, preferably ranging from 4 to 12 % by weight, further preferably from 6 to 10 %.

8. Method as in claim 6 or 7, **characterized in that** at step a) the mixture is used in pulverulent form, having a content of inorganic phosphorus compound(s) ranging from 40 to 80 % by weight, and **in that** at step b) the fibrous support is powder coated with the mixture, which is then bonded by partial or total melting of its organic constituent(s).

9. Method as in claim 8, **characterized in that** step a) is conducted in an inert atmosphere.

10. Method as in claim 6 or 7, **characterized in that** at step a) a mixture of thermosetting prepolymer(s) and/or thermoplastic polymer(s) in emulsion or aqueous dispersion, and of inorganic phosphorus compound(s) in an aqueous dispersion, is used, in a weight ratio of active matter ranging from 60:40 to 20:80, preferably ranging from 35:65 to 20:80, and **in that** at step b) the fibrous support is immersed in the mixture or else coated at least in part on at least one of its surfaces with said mixture.

11. Method as in claim 10, **characterized in that** the fibrous support obtained at step b) is dried then powder coated using a binder.

12. Method as in any of claims 6 to 11, **characterized in that** the thermosetting prepolymer(s) are chosen from among bismaleimide resins, cyanate resins, epoxy resins, and mixtures of these resins.

13. Method as in any of claims 6 to 12, **characterized in that** the thermoplastic polymer(s) are chosen from among polyimides, polyetherimides, polyethersulfones, polysulfones, polyether ketones, polyether ether ketones, polyamides and polyamide-imides.

14. Stack of fibrous reinforcements as in any of claims 1 to 5.

15. Composite item **characterized in that** it is obtained by associating at least one fibrous reinforcement as in any of claims 1 to 5 or a stack as in claim 14 with a resin matrix compatible with the composition of thermosetting prepolymer(s) and/or thermoplastic polymer(s) and of inorganic phosphorus compound(s).

16. Use of a fibrous reinforcement as in any of claims 1 to 5, or of a stack as in claim 14 as flame-retardant agent for the fabrication of composite items.

17. Use as in claim 16, **characterized in that** the composite item is produced using a direct method of RTM type (Resin Transfer Moulding) or LRI type (Liquid Resin Infusion).

## Patentansprüche

1. Faserige Verstärkung, insbesondere für die Herstellung von Verbundteilen, umfassend einen faserigen Träger, der aus Glas-, Kohle- oder Keramikverstärkungsfasern besteht, gegebenenfalls gemischt, der im Kern bearbeitet oder mindestens teilweise auf einer seiner Seiten von einer Zusammensetzung bedeckt ist, die enthält:
i) ein oder mehrere wärmehärtende Vorpolymere, dessen Erweichungstemperatur kleiner als oder gleich 150°C ist und vorzugsweise zwischen 50 und 100°C liegt und /oder
ein oder mehrere thermoplastische Polymere, mit einer Glasübergangstemperatur, die kleiner ist als 300°C und die vorzugsweise zwischen 50 und 200°C liegt, und
ii) eine oder mehrere anorganische Phosphorverbindungen, vorzugsweise aus rotem Phosphor,
wobei der Bearbeitungsanteil des faserigen Trägers durch die anorganische(n) Phosphorverbindung(en) zwischen 2 und 20 Gew.-% liegt, vorzugsweise zwischen 4 und 12 Gew.-%, und ferner vorzugsweise in dem Bereich, der von 6 bis 10 Gew.-% geht, und das (die) wärmehärtende(n) Vorpolymer(e) und das (die) thermoplastische(n) Polymere 1 bis 6% des gesamten Gewichts der faserigen Verstärkung darstellen.

2. Faserige Verstärkung, insbesondere für die Herstellung von Verbundteilen, umfassend einen faserigen Träger, der aus Glas-, Kohle- oder Keramikverstärkungsfasern besteht, gegebenenfalls gemischt, der im Kern bearbeitet oder mindestens teilweise auf einer seiner Seiten von einer Zusammensetzung bedeckt ist, die enthält:
i) ein oder mehrere wärmehärtende Vorpolymere, mit einer Erweichungstemperatur, die kleiner als oder gleich 150°C ist und die vorzugsweise zwischen 50 und 100°C liegt und /oder
ein oder mehrere thermoplastische Polymere, mit einer Glasübergangstemperatur, die kleiner ist als 300°C und die vorzugsweise zwischen 50 und 200°C liegt,
wobei das (die) wärmehärtende(n) Vorpolymer (e) und/oder das (die) thermoplastische(n) Polymere 20 bis 60 Gew.-% der Zusammensetzung betragen und
ii) eine oder mehrere anorganische Phosphorverbindungen, vorzugsweise aus rotem Phosphor, die 80 bis 40 Gew.-% der Zusammensetzung betragen,
wobei der Bearbeitungsanteil des faserigen Trägers durch die anorganische(n) Phosphorverbindung(en) zwischen 2 und 20 Gew.-% liegt, vorzugsweise zwischen 4 und 12% und ferner vorzugsweise zwischen 6 und 10 Gew.-%.

3. Faserige Verstärkung nach einem der Ansprüche 1 oder 2, **dadurch gekennzeichnet, daß** sie ferner mindestens auf einem Anteil ihrer Oberfläche ein Bindemittel umfaßt, das die Form eines Filmes oder auch die Form von Partikeln oder diskreten Bereichen aufweist.

4. Faserige Verstärkung nach einem der Ansprüche 1 bis 3, **dadurch gekennzeichnet, daß** das oder die wärmehärtende(n) Vorpolymer(e) unter den Bismaleimidharzen, den Cyanatharzen, den Epoxidharzen und Gemischen dieser Harze gewählt ist (sind).

5. Faserige Verstärkung nach einem der Ansprüche 1 bis 4, **dadurch gekennzeichnet, daß** das oder die thermoplastische(n) Polymere unter Polyimiden, Polyetherimiden, Polyethersulfonen, Polyetherketonen, Polyetheretherketonen, Polyamiden und Polyamidimiden gewählt ist (sind).

6. Verfahren zur Herstellung einer faserigen Verstärkung, die einen faserigen Träger umfaßt, der aus Verstärkungsfasern aus Glas, Kohlenstoff oder Keramik, gegebenenfalls gemischt, besteht, umfassend die folgenden Schritte:
a) Herstellen eines Gemischs, das umfaßt
• 20 bis 60 Gew.-% eines oder mehrere wärmehärtende Vorpolymere mit einer Erweichungstemperatur, die kleiner als oder gleich 150°C ist und die vorzugsweise zwischen 50 und 100°C liegt und /oder eines oder mehrere thermoplastische Polymere mit einer Glasübergangstemperatur, die kleiner ist als 300°C und die vorzugsweise zwischen 50 und 200°C liegt, und
• 80 bis 40 Gew.-% einer oder mehrerer anorganische Phosphorverbindungen, vorzugsweise aus rotem Phosphor, und
b) Kernbehandlung oder mindestens teilweises Bedecken des faserigen Trägers mit dem so erhaltenen Gemisch, derart, daß das (die) wärmehärtende(n) Vorpolymer (e) und/oder das (die) thermoplastische(n) Polymere 1 bis 6% des gesamten Gewichts der faserigen Verstärkung darstellen.

7. Verfahren zur Herstellung einer faserigen Verstärkung, die einen faserigen Träger umfaßt, der aus Glas-, Kohle- oder Keramikverstärkungsfasern besteht, gegebenenfalls gemischt, umfassend die folgenden Schritte:
a) Herstellen eines Gemischs, das umfaßt:
• 20 bis 60 Gew.-% eines oder mehrerer wärmehärtender Vorpolymere mit einer Erweichungstemperatur, die kleiner als oder gleich 150°C ist und die vorzugsweise zwischen 50 und 100°C liegt und /oder eines oder mehrerer thermoplastischer Polymere mit einer Glasübergangstemperatur, die kleiner ist als 300°C ist und die vorzugsweise zwischen 50 und 200°C liegt, und
• 80 bis 40 Gew.-% einer oder mehrerer anorganischer Phosphorverbindungen, vorzugsweise aus rotem Phosphor, und
b) Kernbehandlung oder mindestens teilweises Bedecken des faserigen Trägers mit dem so erhaltenen Gemisch, derart, dass der Behandlungsanteii des faserigen Trägers durch die anorganische(n) Phosphorverbindung(en) zwischen 2 und 20 Gew.-% liegt, vorzugsweise zwischen 4 und 12 Gew.-% und ferner vorzugsweise zwischen 6 und 10 Gew.-%.

8. Verfahren nach einem der Ansprüche 6 oder 7, **dadurch gekennzeichnet, daß** bei dem Schritt a) ein Gemisch in pulverförmiger Form verwendet wird, dessen Anteil an anorganischer(n) Phosphorverbindung(en) zwischen 40 und 80 Gew.-% liegt und, daß bei dem Schritt b) der faserige Träger mit dem Gemisch bepudert wird, welches danach durch das vollständige oder partielle Schmelzen seines (seiner) organischen Bestandteils (Bestandteile) fixiert wird.

9. Verfahren nach Anspruch 8, **dadurch gekennzeichnet, daß** der Schritt a) unter inerter Atmosphäre durchgeführt wird.

10. Verfahren nach einem der Ansprüche 6 oder 7, **dadurch gekennzeichnet, daß** beim Schritt a) ein Gemisch von wärmehärtenden Vorpolymeren und/oder von thermoplastischen Polymeren in Emulsion oder wässriger Dispersion und von anorganischen Phosphorverbindungen in wässriger Dispersion verwendet wird, wobei das Gewichtsverhältnis in Wirkmaterial zwischen 60:40 und 20:80 liegt, vorzugsweise zwischen 35:65 und 20:80, und daß beim Schritt b) der faserige Träger in das Gemisch eingetaucht wird oder mindestens teilweise auf mindestens einer seiner Seiten mit dem Gemisch bestrichen wird.

11. Verfahren nach Anspruch 10, **dadurch gekennzeichnet, daß** der beim Schritt b) erhaltene faserige Träger getrocknet und mit Hilfe eines Bindemittels dann bepudert wird.

12. Verfahren nach einem der Ansprüche 6 bis 11, **dadurch gekennzeichnet, daß** das oder die wärmehärtende(n) Vorpolymer(e) unter den Bismaleimidharzen, den Cyanatharzen, den Epoxidharzen und Gemischen dieser Harze gewählt ist (sind).

13. Verfahren nach einem der Ansprüche 6 bis 12, **dadurch gekennzeichnet, daß** das oder die thermoplastische(n) Polymere unter Polyimiden, Polyetherimiden, Polyethersulfonen, Polyetherketonen, Polyetheretherketonen, Polyamiden und Polyamideimiden gewählt ist (sind).

14. Stapel faseriger Verstärkungen nach einem der Ansprüche 1 bis 5.

15. Verbundteil, **dadurch gekennzeichnet, daß** es erhalten wird durch die Verbindung von mindestens einer faserigen Verstärkung nach einem der Ansprüche 1 bis 5 oder einem Stapel nach Anspruch 14 mit einer Harzmatrix, die mit der Zusammensetzung von wärmehärtendem(n) Vorpolymer(en) und/oder von thermoplastischem(n) Polymer(en) und von anorganischen Phosphorverbindungen, kompatibel ist.

16. Verwendung einer faserigen Verstärkung nach einem der Ansprüche 1 bis 5 oder eines Stapels nach Anspruch 14 als Flammenschutzmittel für die Herstellung von Verbundteilen.

17. Verwendung nach Anspruch 16, **dadurch gekennzeichnet, daß** das Verbundteil nach einem direkten Verfahren der Art RTM (Resin Transfer Molding) oder LRI (Liquid Resin Infusion) hergestellt wird.
